# EUROPEAN PATENT APPLICATION

(11) **EP 3 527 835 A1**
(43) Date of publication of application: **21.08.2019**
(21) Application number: 17860843.6
(22) Date of filing: 25.09.2017
(51) Int. Cl.: F16B 39/282, F16B 39/30, F16B 35/06

(54) **BOLT ASSEMBLY HAVING NON-LOOSENING NUT**

(30) Priority: 13.10.2016 KR 20160132607
(71) Applicant: Findmold Co., Ltd., Cheongju-si, Chungcheongbuk-do 28644 (KR)
(72) Inventor: YOON, Yeo Been, Daejeon 35207 (KR); KIM, Sang Il, Cheongju-si Chungcheongbuk-do 28124 (KR); SONG, Kyung Mi, Gumi-si Gyeongsangbuk-do 39201 (KR)
(74) Representative: Studio Torta S.p.A.
(86) International application number: PCT/KR2017/010565
(87) International publication number: WO 2018/070696

(57) **Abstract**

Provided is a bolt assembly having an anti-loosening nut, and more particularly, a bolt assembly having an anti-loosening nut in which a pair of nuts moving on a male thread pitch of a bolt are provided to spread and press a pair of adjacent male threads of the bolt to both sides to restrain rotation of the bolt and to suppress loosening of the bolt. For this purpose, the bolt assembly having the anti-loosening nut includes: a bolt including a first male thread; a first nut including a first female thread configured to be screw-coupled to the first male thread of the bolt and a second male thread formed at an outer circumferential surface of the first nut in a direction opposite to that of the first male thread; and a second nut including a second female thread configured to be screw-coupled to the second male thread of the first nut and an anti-loosening female thread corresponding to the first female thread, the anti-loosening female thread formed at a center of the second nut and configured to be screw-coupled to the first male thread through the first female thread, wherein a valley depth of the anti-loosening female thread is greater than a valley depth of the first male thread such that a gap occurs between the first male thread and the anti-loosening female thread and a gap does not occur between the first female thread and the first male thread.

## Description

### TECHNICAL FIELD

The present disclosure relates to a bolt assembly having an anti-loosening nut, and more particularly, to a bolt assembly having an anti-loosening nut for preventing easy loosening of a bolt by restraining rotation of the bolt by pressing a male thread of the bolt while moving on a male thread pitch of the bolt.

### BACKGROUND ART

In general, bolts and nuts are widely used in various fields, such as the assembly of automobile parts, electronic parts, and furniture, to fasten and assemble two or more separate objects into a single body.
A bolt/nut fastening structure according to the related art includes a bolt inserted into a fastening target, which is an object to be fastened, and a nut screw-fastened to the bolt.
In order to improve the fastening force of the bolt and the nut and prevent the loosening thereof due to external impacts and vibration, a washer is tightly inserted between the bolt and the nut.
In order to fasten a fastening target by using the bolt/nut fastening structure, the bolt is passed through an insertion hole formed in the fastening target and then the nut is fastened to a screw portion of the bolt such that the nut is screw-fastened to the bolt. Accordingly, the fastening target is fixed by the bolt and the nut.
In this case, the washer is inserted between the bolt and nut to prevent the loosening thereof due to external impacts and vibration.

However, the bolt/nut fastening structure has a limitation in that the fastening force to the fastening target is weakened or lost because the fastening force of the nut is easily released from the bolt due to external impacts and vibration. In order to solve this limitation, the washer is inserted to maintain the fastening force of the bolt and the nut. However, even in this case, since the fastening force may be weakened after a long period of time, it may be difficult to completely maintain the fastening force of the bolt and the nut.
In order to solve this limitation, various techniques have recently been developed to prevent a bolt and a nut from being loosened after being fastened together.
As an example, Korean Patent Application Publication No. 1999-019896 discloses an anti-loosening structure of a bolt and a grooved nut in which a plurality of fixing feet are formed at the tip of a bolt body and fixing grooves are formed in the grooved nut for insertion and coupling with the plurality of fixing feet, and thus, when the bolt and the grooved nut are fastened together and then the fixing feet are bent and fixed, the fixing feet restrain the separation of the nut to prevent the loosening of the bolt and the nut.
However, the bolt/nut anti-loosening structure according to the related art may have a complex configuration, and a series of processes for fastening and loosening the bolt and the nut may be very troublesome.
Also, the production cost may increase due to the additional processing of a tip portion of the bolt, and the durability of the fixing feet may degrade due to the bending of the fixing feet.
Particularly, a process of bending the fixing feet one by one after fastening the nut may increase the number of operations such that workability and work productivity are reduced.

### Related Art Document

### Patent Document

(Patent Document 1) Korean Application Publication No. 10-1999-019896
(Patent Document 2) Korean Patent No. 10-1625007

### DESCRIPTION OF EMBODIMENTS

### TECHNICAL PROBLEM

Provided is a bolt assembly having an anti-loosening nut in which a pair of nuts are fastened onto a male thread of a bolt, wherein the pair of nuts are loosened in a direction opposite to a bolt fastening direction to press the male thread of the bolt to restrain rotation of the bolt to maintain an initial fastening state for a long period of time without loosening (or release) of the fastening of the bolt and the nut, even when an external impact or a continuous vibration is applied thereto after the bolt and nut are fastened together.

### SOLUTION TO PROBLEM

According to an aspect of the present disclosure, a bolt assembly having an anti-loosening nut includes: a bolt including a first male thread; a first nut including a first female thread configured to be screw-coupled to the first male thread of the bolt and a second male thread formed at an outer circumferential surface of the first nut in a direction opposite to that of the first male thread; and a second nut including a second female thread configured to be screw-coupled to the second male thread of the first nut and an anti-loosening female thread corresponding to the first female thread, the anti-loosening female thread formed at a center of the second nut and configured to be screw-coupled to the first male thread through the first female thread, wherein a valley depth of the anti-loosening female thread is greater than a valley depth of the first male thread such that a gap occurs between the first male thread and the anti-loosening female thread and a gap does not occur between the first female thread and the first male thread.

In this case, grooves and protrusions may be formed in facing surfaces where the first nut and the second nut face each other.

In this case, the grooves and the protrusions may be formed alternately at certain intervals in a circumferential direction of the anti-loosening nut.

Also, a pitch of the second male thread may be smaller than a pitch of the first male thread.

In this case, the anti-loosening nut may be formed in an n-gonal shape, and the second nut may be configured to be rotated by 1/n turns through the gap with the first male thread and the pitch of the second male thread of the first nut.

### ADVANTAGEOUS EFFECTS OF DISCLOSURE

The bolt assembly having the anti-loosening nut according to the present disclosure may have the following effects.

First, since a pair of anti-loosening nuts including the first nut and the second nut may be screw-fastened to the male thread of the bolt and the screw fastening direction between the first nut and the second nut may be formed in a direction opposite to the screw fastening direction of the anti-loosening nut to the male thread of the bolt, the bolt and the anti-loosening nut may not be easily loosened from each other.

Particularly, since the valley depth of the anti-loosening female thread formed at the second nut may be formed to be greater (over-tapped) than the valley depth formed at the first male thread of the bolt, a gap may occur between the first male thread and the anti-loosening female thread, and since the second nut may be loosened and separated by the gap from the first nut, the anti-loosening female thread may contact the first male thread to restrain the rotation of the bolt in the loosening direction.

Accordingly, the loosening of the bolt from the anti-loosening nut may be maximally suppressed, and thus the coupling force between the bolt and the anti-loosening nut may be semipermanently maintained.

Second, since protrusions and grooves are formed at the facing surfaces of the first nut and the second nut, when the anti-loosening female thread contacts the first male thread through the loosening rotation of the second nut, the protrusions may deviate from the grooves and press the facing surface to maximally suppress the restoration of the second nut.

Accordingly, the restraining force of the anti-loosening nut pressing the male thread of the bolt may be further strengthened, and thus the anti-loosening of the bolt and the nut may be maximized.

Third, since the pitch of the second male thread and the pitch of the second female thread may be formed to be smaller than the pitch of the first male thread, the loosening rotational range of the second nut may be maximized.

Accordingly, since the distance between the protrusion and the groove may be maximized, the protrusion deviated from the groove may be suppressed from being easily restored to the groove.

### BRIEF DESCRIPTION OF DRAWINGS

FIG. 1 is an exploded perspective view illustrating a bolt assembly having an anti-loosening nut, according to an embodiment of the present disclosure.
FIG. 2 is a perspective view illustrating a bolt assembly having an anti-loosening nut, according to an embodiment of the present disclosure.
FIG. 3 is a cross-sectional view illustrating a bolt assembly having an anti-loosening nut, according to an embodiment of the present disclosure.
FIG. 4 is a perspective view illustrating a state in which a second nut is rotated and spaced apart from a first nut to prevent loosening in a bolt assembly having an anti-loosening nut, according to an embodiment of the present disclosure.
FIGS. 5A and 5B are operation diagrams illustrating a state in which a second nut is rotated and spaced apart from a first nut and an anti-loosening female thread of an anti-loosening nut presses a first male thread of a bolt to prevent loosening in a bolt assembly having an anti-loosening nut, according to an embodiment of the present disclosure.
FIGS. 6A and 6B are side views illustrating a rotational range of a second nut for anti-loosening in a bolt assembly having an anti-loosening nut, according to an embodiment of the present disclosure.

### BEST MODE

The terms or words used in the specification and the claims are not limited to the general or bibliographical meanings, but are merely used to enable a clear and consistent understanding of the present disclosure.

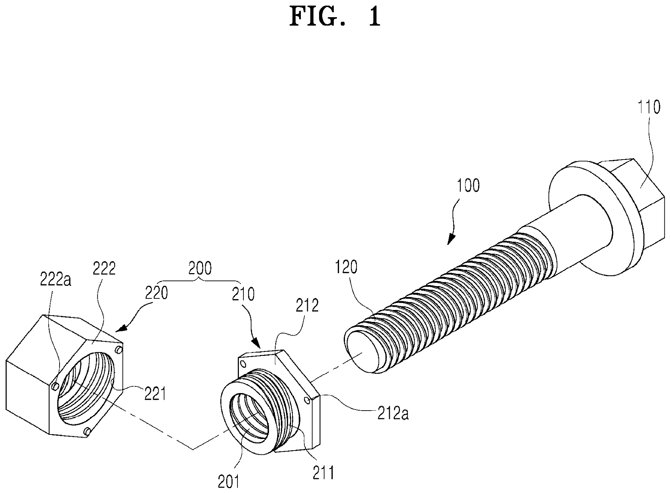

Hereinafter, a bolt assembly having an anti-loosening nut (hereinafter referred to as "bolt assembly") according to an embodiment of the present disclosure will be described with reference to FIG. 1 to FIG. 6B.

The bolt assembly may have a technical feature including a pair of anti-loosening nuts on a male thread of a bolt.

The anti-loosening nuts may be provided in a pair fastened on the thread of the bolt separately from the fastening to the bolt. The loosening of the bolt may be suppressed by restraining the rotation of the bolt by pressing the male thread by using an operation of the pair of anti-loosening nuts being loosened and separated from each other.

As illustrated in FIG. 1, the bolt assembly may include a bolt 100 and an anti-loosening nut 200.

The bolt 100 may be fastened to the anti-loosening nut 200 to fix a fastening target. As illustrated in FIG. 1, the bolt 100 may include a head portion 110 and a screw portion 120.

The head portion 110 may be provided in various shapes as a portion for use of a tool.

Although illustrated herein as a hexagonal shape for convenience of description, the shape is not limited thereto.

Also, although the head portion 110 is illustrated for convenience of description, the head portion 110 may not necessarily be provided.

The screw portion 120 may be screw-coupled to the anti-loosening nut 200 and may be formed to extend from the head portion 110.

A male thread may be formed at the screw portion 120, and the thread forming direction thereof is not limited.

Herein, a right-handed thread is formed as an example of the male thread, and it will referred to as a first male thread 121 for convenience of description.

Next, the anti-loosening nut 200 may be screw-fastened to the bolt 100 to fix the fastening target and may be provided in a pair.

A pair of anti-loosening nuts 200 may be spaced apart from each other on the first male thread 121 of the bolt 100 to press the first male thread 121 of the bolt 100 to restrain the rotation of the bolt 100 to suppress the loosening of the bolt 100 from the nut due to the rotation of the bolt 100.

The anti-loosening nuts 200 may be provided in a pair as described above and will be referred to as a first nut 210 and a second nut 220 for convenience of the description.

The first nut 210 may constitute one side of the anti-loosening nut 200, wherein a screw hole having a first female thread 201 may be formed at a center thereof for fastening to the bolt 100 and a second male thread 211 may be formed at an outer circumferential surface of the screw hole.

The first female thread 201 may correspond to the first male thread 121 of the bolt 100 and the first male thread 121 and the first female thread 201 may be designed to have no gap therebetween and thus they may be firmly coupled to each other.

The second male thread 211 may be formed for screw-fastening to the second nut 220 and the thread forming direction thereof may be formed in a direction opposite to the screw forming direction of the first male thread 121.

That is, the second male thread 211 may be formed as a reverse thread with respect to the screw direction of the first male thread 121.

For example, when the first male thread 121 is a right-handed thread, the second male thread 211 may be formed as a left-handed thread.

The second male thread 211 may be screw-fastened to the second nut 220 and may be formed to move on the first male thread 121 of the bolt 100 through the loosening rotation of the second nut 220.

That is, when the second nut 220 rotates to one side, the second nut 220 may be tightened to contact the first nut 210, and when the second nut 220 rotates to the other side, the second nut 220 may be loosened and separated from the first nut 210 to move on the first male thread 121 of the bolt 100.

Meanwhile, the pitch of the second male thread 211 may be formed to be smaller than the pitch of the first male thread 121 of the bolt 100.

This may be to ensure the maximum rotation range of the second nut 220.

That is, by shortening the pitch of the second male thread 211, the rotation range of the second nut 220 may be maximized and thus protrusions may be maximally deviated from grooves, which will be described below.

This will be described below in detail.

Herein, for example, when the anti-loosening nut 200 is formed in a hexagonal shape, a plurality of grooves 212a may be formed at a hexagonal first facing surface 212 formed at the first nut 210.

The grooves 212a may be to prevent protrusions 222a (which will be described below) from interfering with the first facing surface 212 such that the first nut 210 and the second nut 220 may maintain a close contact with each other.

The depth of the grooves 212a may be formed to correspond to the protruding length of the protrusions 222a, and the positions of the grooves 212a may be formed alternately at portions corresponding to the angles of the first facing surface 212. Meanwhile, the second nut 220 may constitute the other side of the anti-loosening nut 200, wherein a second female thread 221 for screw-fastening to the first nut 210 may be formed at a center thereof and an anti-loosening female thread 221a for screw-fastening of the first male thread 121 may be formed at the center where the second female thread 221 is formed.

The second female thread 221 may be screw-fastened to the second male thread 211 of the first nut 210 and the thread direction of the second female thread 221 may also be formed as a reverse thread direction.

Also, since the pitch of the second female thread 221 corresponds to the pitch of the second male thread 211, the pitch of the second female thread 221 may be formed to be smaller than the pitch of the first male thread 121.

That is, the rotation range of the second nut 220 may be maximized due to the pitch design of the second female thread 221.

The pitch design of the second female thread 221 and the second male thread 211 may be designed such that the second nut 220 may be rotated by 1/6 turns together with the valley depth of the anti-loosening female thread 221a described below. That is, considering the hexagonal shape of the anti-loosening nut 200, through the valley depth design of the anti-loosening female thread 221a (described below) together with the short pitches of the second female thread 221 and the second male thread 211, the rotation of the second nut 220 may be designed to be 1/6 turns.

The anti-loosening female thread 221a may be screw-fastened to the first male thread 121 of the bolt 100 passed through the first female thread 201 of the first nut 210, to suppress the loosening of the bolt 100.

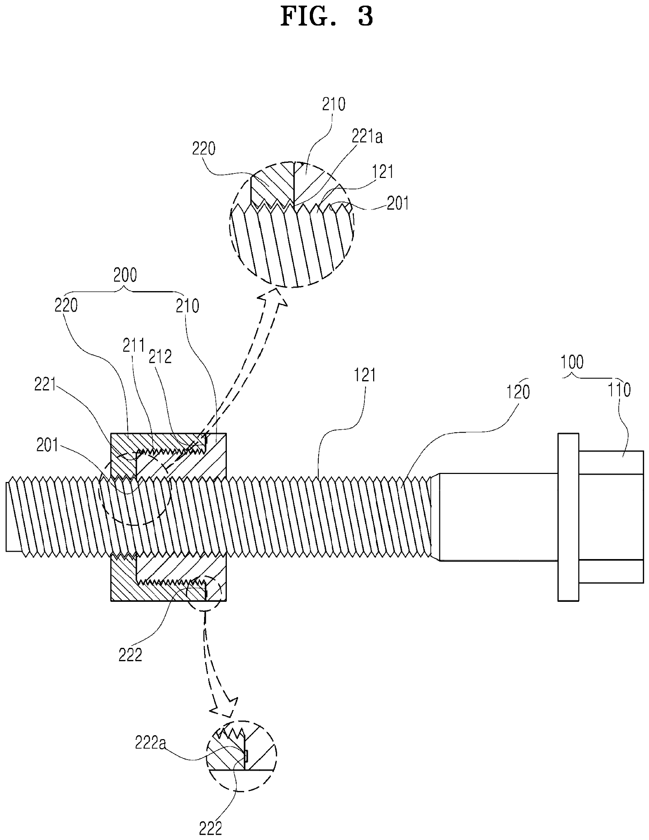

As illustrated in FIG. 3, the valley formed by the anti-loosening female thread 221a may be formed to be deeper than the valley formed by the first male thread 121.

As illustrated in FIG. 3, due to the difference between the valley depth of the anti-loosening female thread 221a and the valley depth of the first male thread 121, a gap may occur between the first male thread 121 and the anti-loosening female thread 221a.

The movement interval of the second nut 220 may be ensured by the gap described above.

That is, since the space where the second nut 220 may be moved to the left in the drawing (FIG. 3) is ensured, the second nut 220 may be moved on the first male thread 121 through the loosening rotation of the second nut 220 from the first nut 210 and the anti-loosening female thread 221a may press the first male thread 121 to restrain the rotation of the bolt 100.

Since the rotation of the bolt 100 may be restrained as above, the loosening of the bolt 100 from the anti-loosening nut 200 may be suppressed.

Meanwhile, the valley depth of the anti-loosening female thread 221a may be formed such that the loosening rotation range of the second nut 220 for movement of the second nut 220 may be 1/2n.

That is, herein, considering the hexagonal shape of the anti-loosening nut 200, the valley depth of the anti-loosening female thread 221a may be formed such that the second nut 220 may be rotated by 1/12 turns.

Accordingly, as described above, due to the technical feature of the valley depth of anti-loosening female thread 221a and the technical feature of the short pitch of the second male thread 211, the second nut 220 may be rotated by n/1 turns, that is, 1/6 turns.

Protrusions 222a inserted into the grooves 212a of the first nut 210 may be formed at a second facing surface 222 of the second nut 220.

The protrusions 222a may be to maximize the force of the anti-loosening female thread 221a restraining the rotation of the bolt 100 to press the first male thread 121 when the pair of anti-loosening nuts 200 are spaced apart from each other, and to maximally suppress the restoration of the rotated second nut 220.

That is, the protrusions 222a may press the first facing surface 212 of the first nut 210 to further push the second nut 220 from the first nut 210 by the length of the protrusions 222a, and thus the pressing force of the anti-loosening female thread 221a pressing the first male thread 121 may be maximized to strengthen the rotation restraining force of the bolt 100.

Also, since the protrusions 222a may press the first facing surface 212, they may exert a deterrent force to prevent the easy rotation of the second nut 220.

The protrusions 222a may be formed to protrude from the second facing surface 222 and may be formed alternately at portions corresponding to the angles of the second facing surface 222.

That is, three protrusions 222a may be formed at the hexagonal second facing surface 222, but the number and position thereof are not limited thereto.

Hereinafter, the coupling and operation of the bolt assembly having the above structure will be described.

The second male thread 211 of the first nut 210 may be inserted into the second female thread 221 of the second nut 220 and then rotated in the left direction to be fastened to provide the anti-loosening nut 200.

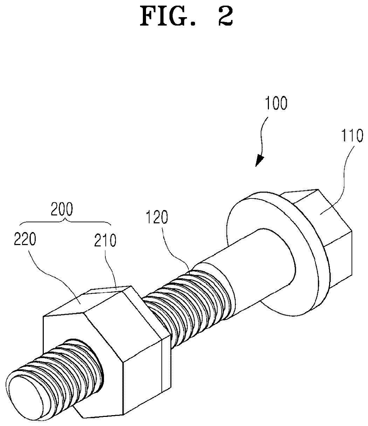

Next, the bolt 100 may be passed through a through-hole formed at a fastening target (not illustrated), and the anti-loosening nut 200 may be fastened to the end of the bolt 100 as illustrated in FIG. 2.

In this case, the first male thread 121 of the bolt 100 may be inserted into the first female thread 201 of the anti-loosening nut 200 and then rotated in the right direction to be fastened.

As may be seen from this, since the screw-fastening direction between the anti-loosening nuts 200 and the screw-fastening direction between the bolt 100 and the anti-loosening nut 200 may be opposite to each other, the loosening directions thereof may be opposite to each other and thus the loosening therebetween may be suppressed.

Also, the protrusions 222a formed at the second nut 220 may be inserted into the grooves 212a formed at the first nut 210, and thus the first nut 210 and the second nut 220 may contact each other on the first male thread 121 of the bolt 100.

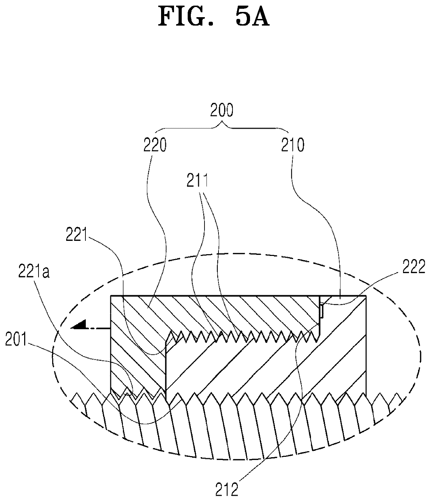

In this case, as illustrated in FIGS. 3 and 5A, the first male thread 121 of the bolt 100 may exactly correspond to the first female thread 201, but a gap may occur in the anti-loosening female thread 221a due to the valley depth difference therebetween. Meanwhile, in this state, the second nut 220 may be rotated in the loosening direction.

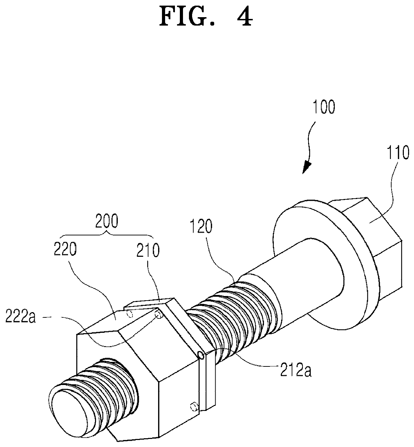

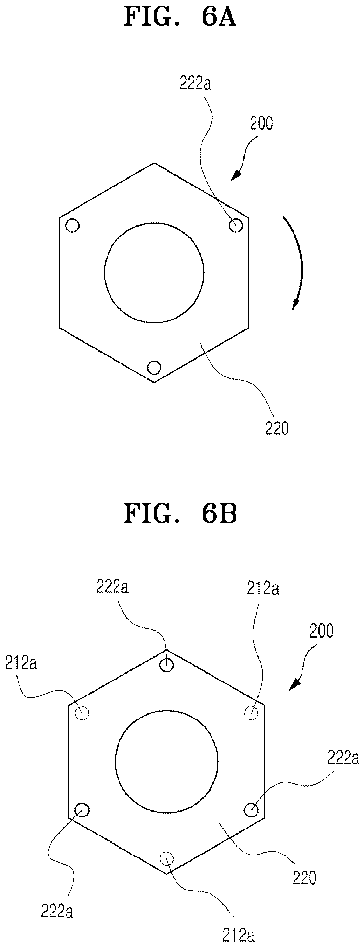

As illustrated in FIGS. 4 and 6, when the second nut 220 is rotated in the loosening direction, the second nut 220 may be loosened and separated from the first nut 210 and the protrusions 222a inserted into the grooves 212a may be deviated from the grooves 212a to contact the first facing surface 212 to forcibly maintain the spacing between the first nut 210 and the second nut 220.

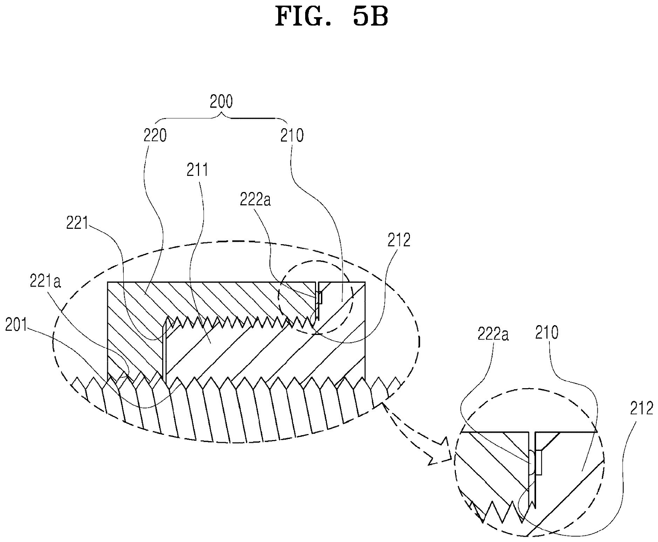

In this case, as illustrated in FIGS. 5A and 5B, the anti-loosening female thread 221a of the second nut 220 may be moved in the loosening direction to press the first male thread 121 adjacent thereto.

That is, the second nut 220 may be separated by a gap distance from the first nut 210 through the loosening rotation to push and press the first male thread 121 to restrain the rotation of the bolt 100.

Even when an external vibration is applied to the bolt assembly, since the bolt 100 tends to loosen in the left direction and the second nut 220 tends to loosen in the right direction, the pressing state of the anti-loosening female thread 221a to the first male thread 121 may not be released.

Particularly, since the protrusions 222a may be deviated from the grooves 212a to contact the first facing surface 212 as illustrated in FIGS. 4 and 5B, the second nut 220 may be separated from the first nut 210 by the length of the protrusions 222a and thus the pressing force of the anti-loosening female thread 221a to the first male thread 121 may be maximized.

Also, since the pitches of the second male thread 211 and the second female thread 221 are formed to be smaller than the pitch between the first male thread 121 and the first female thread 201, the rotation range of the second nut 220 may be maximized together with the technical feature of the valley depth of the anti-loosening female thread 221a and the rotation may be performed by 1/6 turns as illustrated in FIGS. 6A and 6B.

As such, since the return distance of the protrusions 222a to the grooves 212a may be maximized, the protrusions 222a may not easily return to the grooves 212a even in the event of an external vibration thereto.

Accordingly, since the bolt 100 and the anti-loosening nut 200 may not be easily loosened, the fastening force of the bolt 100 and the anti-loosening nut 200 may be maintained for a long period of time.

As described above, the bolt assembly having the anti-loosening nut according to the present disclosure may have a technical feature in which a pair of anti-loosening nuts may be moved on the male thread of the bolt.

Accordingly, since the rotation of the bolt may be restrained by the pressing/pushing force of the female thread of the anti-loosening nut to the male thread, the loosening of the bolt may be suppressed.

Particularly, since protrusions and grooves may be formed between the pair of anti-loosening nuts and the protrusions may be operated to push the pair of anti-loosening nuts, the force of pressing the male thread may be maximized and thus the fastening force may be maintained for a long period of time through the anti-loosening of the bolt.

While the present disclosure has been described above in detail with reference to example embodiments thereof, those of ordinary skill in the art will readily understand that various changes and modifications may be made therein without departing from the spirit and scope of the present disclosure defined in the appended claims.

**Reference Numerals**

| | |
|---|---|
| 100: Bolt | 110: Head Portion |
| 120: Screw Portion | 121: First Male Thread |
| 200: Anti-loosening Nut | 201: First Female Thread |
| 210: First Nut | 211: Second Male Thread |
| 212: First facing Surface | 212a: Groove |
| 220: Second Nut | 221: Second Female Thread |
| 222: Second Facing Surface | 222a: Protrusion |
| 221a: Anti-loosening Female Thread | |

## Claims

1. A bolt assembly having an anti-loosening nut, the bolt assembly comprising:
a bolt comprising a first male thread;
a first nut comprising a first female thread configured to be screw-coupled to the first male thread of the bolt and a second male thread formed at an outer circumferential surface of the first nut in a direction opposite to that of the first male thread; and
a second nut comprising a second female thread configured to be screw-coupled to the second male thread of the first nut and an anti-loosening female thread corresponding to the first female thread, the anti-loosening female thread formed at a center of the second nut and configured to be screw-coupled to the first male thread through the first female thread,
wherein a valley depth of the anti-loosening female thread is greater than a valley depth of the first male thread such that a gap occurs between the first male thread and the anti-loosening female thread and a gap does not occur between the first female thread and the first male thread.

2. The bolt assembly of claim 1, wherein grooves and protrusions are formed in facing surfaces where the first nut and the second nut face each other.

3. The bolt assembly of claim 2, wherein the grooves and the protrusions are formed alternately at certain intervals in a circumferential direction of the anti-loosening nut.

4. The bolt assembly of any one of claims 1 to 3, wherein a pitch of the second male thread and a pitch of the second female thread are smaller than a pitch of the first male thread.

5. The bolt assembly of claim 4, wherein the anti-loosening nut is formed in an n-gonal shape, and
the second nut is configured to be rotated by 1/n turns through the gap with the first male thread and the pitch of the second male thread of the first nut.
